# EUROPÄISCHE PATENTSCHRIFT

(11) **EP 0 456 607 B1**
(45) Veröffentlichungstag und Bekanntmachung des Hinweises auf die Patenterteilung: **03.01.1996**
(21) Anmeldenummer: 91810329.2
(22) Anmeldetag: 30.04.1991
(51) Int. Cl.: C02F 3/30

(54) **Wasserreinigungsverfahren**
Water purification process
Procédé pour la purification d'eau

(30) Priorität: 08.05.1990 CH 1554/90
(43) Veröffentlichungstag der Anmeldung: 13.11.1991
(73) Patentinhaber: CIBA-GEIGY AG, CH-4002 Basel (CH)
(72) Erfinder: Thüer, Markus, Dr., CH-4310 Rheinfelden (CH); Stucki, Gerhard, Dr., CH-4466 Ormalingen (CH); Boss, Roland, Dr., CH-4416 Bubendorf (CH)

(56) Entgegenhaltungen:
- EP-A- 0 297 417
- DE-A- 3 324 073
- DE-A- 3 537 307
- DE-A- 3 800 713
- DE-A- 3 816 679
- DE-A 3537307
- DE-A 3537307
- DE-A 3324073

## Beschreibung

Die vorliegende Erfindung betrifft ein neues Verfahren zur Reinigung von Wasser enthaltend eine Mischung von halogenierten Verbindungen, vorzugsweise halogenierten Kohlenwasserstoffen, sowie eine Vorrichtung zur Durchführung des Verfahrens.

In der Vergangenheit wurden vielfältige Untersuchungen zum biologischen Abbau halogenierter Verbindungen, vorzugsweise halogenierter Kohlenwasserstoffe durchgeführt. Diese Untersuchungen beschäftigen sich jedoch nur mit dem Abbau einzelner Substanzen, relativ höher Konzentration unter Laborbedingungen zur Aufklärung der Abbaumechanismen. Es zeigt sich aber im Zuge der sogenannten "Sanierung von Altlasten", dass hierfür Verfahren benötigt werden, die Mischungen halogenierter Verbindungen, vorzugsweise halogenierter Kohlenwasserstoffe, geringer Konzentration möglichst vollständig eliminieren. Hierzu wurde z.B. vorgeschlagen das in Frage stehende Wasser über Aktivkohlefilter zu leiten und anschliessend die verunreinigte Aktivkohle zu entsorgen. Neben ungelösten Fragen der Entsorgung derartiger Kohlen ist die ständige Erneuerung des Aktivkohlefilters ein technisch aufwendiges und teures Verfahren.

In der europäischen Patentanmeldung Nr. 0297417 wird ein Verfahren zur Beseitigung von Verunreinigungen im Boden, insbesondere zur Grundwassersanierung beschrieben, wobei aus dem Boden (Grund-)Wasser abgezogen überirdisch gereinigt und wieder in den Boden eingeleitet wird, dadurch gekennzeichnet, dass das Abziehen und Wiedereinleiten des Wassers in den Boden derart erfolgt, dass der Boden durchspült wird und das Wasser biologisch gereinigt wird. Demgemäss wird kein Verfahren zur Wassersanierung ohne eine kombinierte Bodenspülung beschrieben.

In der deutschen Patentanmeldung DE-A-3 324 073 wird eine Kläranlage beschrieben, zur biologischen Reinigung von organisch verunreinigtem Abwasser, mit einem aus stückigem Material bestehenden Festbettreaktor, der als Haftfläche für anaerobe Mikroorganismen dient und vom Abwasser durchflossen wird, wobei das Material des Festbettreaktors mindestens teilweise leichter als Wasser ist, dadurch gekennzeichnet, dass dem Festbettreaktor ein von oben nach unten durchflossener aerober Festbettreaktor nachgeschaltet ist, dessen Material mindestens teilweise leichter als Wasser ist.

Es wurde nun gefunden, dass sich die meisten der halogenierten Verbindungen, vorzugsweise halogenierte Kohlenwasserstoffe, die das Wasser belasten, biologisch zu über 90% in ihrer Konzentration durch das im folgenden erläuterte Verfahren abbauen lassen.

Das erfindungsgemässe Verfahren ist dadurch gekennzeichnet, dass man mit einer Mischung halogenierter Verbindungen, vorzugsweise halogenierter Kohlenwasserstoffe, belastete Wasser in einer Konzentration von 10 µg/l-10 g/l, durch mindestens zwei Reaktoren (Behandlungsstufen) leitet, welche mit einem porösen Material, das von einem oder mehreren Mikroorganismen besiedelt ist, gefüllt sind, wobei der erste Reaktor unter anaeroben Bedingungen betrieben wird und dieser von einem aerob betriebenen Reaktor gefolgt wird.

In einer weiteren Ausprägung des Verfahrens kann sowohl die anaerobe wie die aerobe Behandlungsstufe in mehreren Reaktoren erfolgen. Die Reaktoren können parallel oder in Reihe angeordnet sein.

Die Konzentration der in einer Mischung vorliegenden halogenierten Verbindungen, vorzugsweise halogenierten Kohlenwasserstoffe, beträgt vorzugsweise 100 µg/l-10 mg/l Wasser.

Der Begriff Wasser umfasst im Rahmen dieser Erfindung verunreinigte Grund- und Abwässer verschiedenster Herkunft z. B. Grundwasser, Oberflächenwasser, Deponiesickerwasser, häusliches Abwasser, konzentriertes Abwasser, Prozessabwasser, Industrieabwasser sowie Gemische dieser Wässer.

Bei der Mischung der das Wasser belastenden halogenierten Verbindungen, vorzugsweise halogenierten Kohlenwasserstoffen, handelt es sich um eine Mischung von aliphatischen und/oder aromatischen Substanzen. Vorzugsweise enthalten die halogenierten Kohlenwasserstoffe bis zu 9 C-Atome. Die Verbindungen, vorzugsweise halogenierte Kohlenwasserstoffe, sind, auch mehrfach, mit Halogenatomen substituiert, wobei Chlor und Brom bevorzugt ist. Nachfolgende Liste von halogenierten Kohlenwasserstoffen dient der Illustration ohne die möglichen Kohlenwasserstoffe hierauf beschränken zu wollen: Tetrachlorkohlenstoff, Chloroform, 1,1,2,2-Tetrachlorethan, 1,1,1-Trichlorethan, 1,2-Dichlorethan, 1,2,3-Trichlorpropan, Tetrachlorethen, Trichlorethen, cis bzw. trans 1,2-Dichlorethen, 1,1-Dichlorethen, cis 1,3-Dichlorpropen, 1,2-Dichlorbenzol, 1,3-Dichlorbenzol, 1,4-Dichlorbenzol, 3-Chlortoluol und Brombenzol, sowie verschieden substituierte Chlorphenole und Dichlorphenole; bevorzugt ist eine Mischung enthaltend Trichlorethen, Tetrachlorethen, 1,2,3-Trichlorpropan, Chloroform und/oder 1,3-Dichlorbenzol.

Die möglichen porösen Materialien können natürlich vorkommende oder synthetische Materialien sein; bevorzugt sind: Sinterglas, vulkanisches Gestein, Blähschiefer, Blähton, Sand, geschäumter Kunststoff (z.B. Polyurethanschaum mit und ohne Einlagerung von Aktivkohleteilchen) und Aktivkohle. Aus praktischen Gründen kommen vor allem Sinterglas, Polyurethanschaum und Aktivkohle in Frage, wobei Aktivkohle besonders bevorzugt ist. Aktivkohle weist neben der guten Fixierung der Mikroorganismen auch eine gute Pufferwirkung für die Schadstoffe auf.

Die erfindungsgemäss einsetzbaren Mikroorganismen lassen sich auf vielfältige Art und Weise gewinnen. Es kann sich bei den Mikroorganismen auch um Mischpopulationen handeln. Brauchbare Mikoorganismen lassen sich aus Klärschlamm oder kontaminierten Böden isolieren, oder aber die Mikroorganismen werden bevorzugt als Reinkultur eingesetzt. Genauere Hinweise zur Isolierung und Kultivierung von Mikroorganismen sind dem Artikel von A.M. Cook et al in Experientia 39, S. 1191 (1983) zu entnehmen, der hiermit Teil der Beschreibung ist.

Zur Aufrechterhaltung anaerober Bedingungen in der ersten Stufe des Verfahrens kann es nötig sein dem Wasser eine Substanz, welche als Kohlenstoffquelle dient zuzusetzen. Hierfür sind beispielsweise Alkohole, organische Säuren oder auch Zucker geeignet, bevorzugt wird Methanol verwendet. Die Überwachung des anaeroben Zustands der ersten Stufe ist über die Gasproduktion (Methan) möglich. Diese Gasproduktion sollte möglichst gering gehalten werden, da sonst die Gefahr besteht, dass einige der halogenierten Verbindungen mit diesem Gas ausgetragen und damit nicht abgebaut werden.

Bei der zweiten Verfahrensstufe, dem aeroben Abbau kann es, bedingt durch den Nähr- und eventuellen Sauerstoffbedarf der Mikroorganismen, notwendig sein, dem Wasser vor dem Durchgang durch den Reaktor die benötigten Nährstoffe z.B. in Form von anorganischen Salzen zuzusetzen, auch kann man gegebenenfalls die Sauerstoffkonzentration des Wassers erhöhen. Bevorzugt für eine Zugabe von "Sauerstoff" ist eine Lösung von H₂O₂ in Wasser, die je nach Durchsatzmenge Wasser und den Dosiereinrichtungen in einer Konzentration von 0,5-50 % zudosiert wird.

Weiterhin kann es bei stark belastetem Wasser oder schwach gepuffertem Wasser zu einer Übersäuerung des Reaktors kommen, da der Abbau der halogenierten Verbindungen zu einer Erhöhung der Halogenwasserstoff-Konzentration führt. In einem solchen Fall ist es günstig, bevorzugt vor einem Reaktor bzw. mehreren Reaktoren, den pH-Wert anzupassen, indem man dem Wasser eine Base z.B. NaOAc oder NaHCO₃ zugibt oder, insbesondere bei Verwendung eines Fliessbettreaktors, eine automatische pH-Regelung im Kreislauf vorsieht.

Das Verfahren kann in einem Temperaturbereich von z.B. 5-35°C durchgeführt werden.

Zur Durchführung des Verfahrens verwendet man übliche Fest- oder Fliessbettreaktoren. Im allgemeinen ist der Reaktortyp ohne Einfluss auf die Abbaurate, jedoch wird bei sehr hohen Schadstoffeingangskonzentrationen bevorzugt ein Fliessbettreaktor verwendet, während bei sehr tiefen Konzentrationen ein Festbettreaktor bevorzugt ist.

Das folgende Beispiel veranschaulicht die Erfindung ohne sie darauf zu limitieren.

Beispiel : Eine Kolonne (Schütt-Volumen 5 l), zu 2/3 gefüllt mit Sinterglaskugeln (Durchmesser 1-5 mm), wird als anaerober Festbett-Umlaufreaktor betrieben. Als Impfmaterial werden Schlämme aus Abwasserreinigungsanlagen sowie Versuchsanlagen verwendet, die längere Zeit mit halogenierten Verbindungen, vorzugsweise Kohlenwasserstoffen in Kontakt waren. Das zugeführte natürliche Grundwasser ist mit einem Gemisch von 7 bis 17 verschiedenen Halogenkohlenwasserstoffen à je 1 mg/l sowie 50 (20 bis 100) mg/l Methanol und 1 bis 10 mg/l Hefe-Extrakt angereichert.

Pro Tag werden der Anlage 10 l "verunreinigtes" Grundwasser zugeführt; die Temperatur des Reaktors wird bei 35°C gehalten; der pH-Wert im Reaktor zwischen 6,5 und 7,5.

Der Auslauf der anaeroben Anlage wird in die aerobe Stufe geführt.

Der aerobe Reaktor besteht aus einer schlanken Glas-Kolonne von 2 l Inhalt, welche zur Hälfte mit Quarzsand (Durchmesser 0,5 bis 0,8 mm) gefüllt ist und als Fliessbett-Umlaufreaktor betrieben wird. Das ursprüngliche Schüttvolumen des Quarzsandes von 50 % (im Ruhezustand) dehnt sich auf etwa 80 % des Reaktorvolumens aus. In den Wasser-Kreislauf wird, geregelt über eine Sauerstoff-Messung, verdünntes H₂O₂ als Sauerstoff-Quelle eingespiesen. Als Impfmaterial werden Schlämme aus verschiedenen Abwasserreinigungsanlagen verwendet, die längere Zeit mit halogenierten Substanzen in Kontakt waren.

Pro Tag werden der Anlage ca. 4 l in der ersten anaeroben Stufe vorbehandeltes Grundwasser zugeführt; die Temperatur des Bioreaktors liegt bei Raumtemperatur, der pH-Wert im Reaktor zwischen 6,5 und 7,5.

Der Abbau der Einzelsubstanzen wird durch "Head-Space-Gaschromatographie" im Zu- und Ablauf der Anlage gemessen.

Es ergeben sich für das 2-stufige System (anaerob, aerob) die folgenden Abbauraten pro Einzelsubstanz (innerhalb des Gemisches):

| Laufzeit Tage seit Versuchsbeginn d | Trichlorethen % | Tetra chlorethen % | 1,2,3-Trichlorpropan % | Chloroform % | 1,3-Dichlorbenzol % |
|---|---|---|---|---|---|
| 29 | 60 | 72 | 29 | 79 | 80 |
| 57 | 59 | 72 | 26 | 86 | 79 |
| 106 | 65 | 78 | 29 | 68 | 74 |
| 133 | 80 | 78 | 30 | 52 | 75 |
| 196 | 95 | 90 | 45 | 87 | 83 |
| 211 | 99 | 97 | 99 | 99 | 85 |

## Patentansprüche

1. Verfahren zur Wasserreinigung, dadurch gekennzeichnet, dass man das mit einer Mischung halogenierter Verbindungen, vorzugsweise halogenierter Kohlenwasserstoffe, belastete Wasser in einer Konzentration von 10µg/l-10g/l, durch mindestens zwei Reaktoren (Behandlungsstufen) leitet, welche mit einem porösen Material, das von einem oder mehreren Mikroorganismen besiedelt ist, gefüllt sind, wobei einer der Reaktoren unter anaeroben Bedingungen betrieben wird und dieser von einem aerob betriebenen Reaktor gefolgt wird.

2. Verfahren gemäss Anspruch 1, dadurch gekennzeichnet, dass die anaerobe und/oder die aerobe Behandlungsstufe in mehreren Reaktoren erfolgt, welche parallel und/oder in Reihe angeordnet sind.

3. Verfahren gemäss Anspruch 1, dadurch gekennzeichnet, dass die halogenierten Verbindungen, vorzugsweise halogenierten Kohlenwasserstoffe, chlorierte und/oder bromierte Verbindungen sind.

4. Verfahren gemäss Anspruch 3, dadurch gekennzeichnet, dass die halogenierten Kohlenwasserstoffe bis zu maximal 9 C-Atome enthalten.

5. Verfahren gemäss Anspruch 4, dadurch gekennzeichnet, dass die halogenierten Kohlenwasserstoffe Trichlorethen, Tetrachlorethen, 1,2,3-Trichlorpropan, Chloroform und/oder 1,3-Dichlorbenzol sind.

6. Verfahren gemäss einem der Ansprüche 1 bis 5, dadurch gekennzeichnet, dass das poröse Material Sinterglas, vulkanisches Gestein, Blähschiefer, Blähton, Sand, geschäumter Kunststoff oder Aktivkohle ist.

7. Verfahren gemäss Anspruch 6, dadurch gekennzeichnet, dass das poröse Material Sinterglas, Polyurethanschaum mit und ohne Einlagerung von Aktivkohleteilchen oder Aktivkohle ist.

8. Verfahren gemäss Anspruch 7, dadurch gekennzeichnet, dass das poröse Material Aktivkohle ist.

9. Verfahren gemäss einem der Ansprüche 1 bis 8, dadurch gekennzeichnet, dass die eingesetzten Mikroorganismen aus einer Reinkultur, aus Klärschlamm oder aus kontaminierten Böden erhalten werden.

10. Verfahren gemäss einem der Ansprüche 1 bis 9, dadurch gekennzeichnet, dass dem Wasser vor dem Durchgang durch die erste Verfahrensstufe eine Kohlenstoffquelle und/oder, im Fall der zweiten Verfahrensstufe, eine Sauerstoff freisetzende Substanz und/oder Nährstoffe zugesetzt wird, sowie gegebenenfalls der pH-Wert in beiden oder nur einer der Verfahrensstufen angepasst wird.

11. Verfahren gemäss Anspruch 10, dadurch gekennzeichnet, dass die Substanz, welche als Kohlenstoffquelle dient ausgewählt ist aus der Gruppe der Alkohole, organischen Säuren und Zucker, wobei Methanol bevorzugt ist.

12. Verfahren gemäss Anspruch 10, dadurch gekennzeichnet, dass man dem Wasser vor der aeroben Stufe als Sauerstoff freisetzende Substanz H₂O₂ zugibt.

13. Verfahren gemäss Anspruch 1, dadurch gekennzeichnet, dass man das mit einer Mischung aus Trichlorethen, Tetrachlorethen, 1,2,3-Trichlorpropan, Chloroform und/oder 1,3-Dichlorbenzol in einer Konzentration von 100 µg/l-50 mg/l belastete Wasser durch zwei in Reihe angeordnete Fest- oder Fliessbettreaktoren leitet, welche mit Sinterglas beschickt sind, welches von Mikroorganismen, die von Klärschlämmen erhalten werden, besiedelt ist, wobei der erste Reaktor unter anaeroben Bedingungen betrieben wird und dieser von einem aerob betriebenen Reaktor gefolgt wird, wobei dem Wasser vor dem Durchgang durch den anaerob betriebenen Reaktor Methanol und vor dem Durchgang durch den aerob betriebenen Reaktor eine wässrige H₂O₂-Lösung, sowie gegebenenfalls anorganische Salze und/oder pH-regulierende Substanzen zugesetzt werden.

14. Verfahren gemäss Anspruch 1, dadurch gekennzeichnet, dass man als Reaktor einen üblichen Fest- oder Fliessbettreaktor verwendet.

## Claims

1. A process for purifying water, which comprises passing the water, which is polluted by a mixture a halogenated compounds, preferably halogenated hydrocarbons, in a concentration of 10 µg/1-10 g/l through at least two reactors (treatment stages) packed with a porous material populated by one or more microorganisms, one of the reactors being operated under anaerobic conditions and being followed by an aerobically operated reactor.

2. A process according to claim 1, wherein the anaerobic and/or aerobic treatment stages are carried out in a plurality of reactors which are arranged in parallel and/or in series.

3. A process according to claim 1, wherein the halogenated compounds, preferably halogenated hydrocarbons, are chlorinated and/or brominated compounds.

4. A process according to claim 3, wherein the halogenated hydrocarbons contain up to 9 carbon atoms.

5. A process according to claim 4, wherein the halogenated hydrocarbons are trichloroethene, tetrachloroethene, 1,2,3-trichloropropane, chloroform and/or 1,3-dichlorobenzene.

6. A process according to any one of claims 1 to 5, wherein the porous material is sintered glass, volcanic rock, expanded shale, expanded clay, sand, foamed plastic or activated carbon.

7. A process according to claim 6, wherein the porous material is sintered glass, polyurethane foam with and without incorporated activated carbon particles, or activated carbon.

8. A process according to claim 7, wherein the porous material is activated carbon.

9. A process according to any one of claims 1 to 8, wherein the microorganisms used are obtained from a pure culture, from sewage sludge or from contaminated soils.

10. A process according to any one of claims 1 to 9, wherein a carbon source is added to the water before it passes through the first process stage and/or, in the case of the second process stage, an oxygen-releasing substance and/or nutrients are added and, if appropriate, the pH is adjusted in both or in only one of the process stages.

11. A process according to claim 10, wherein the substance used as the carbon source is selected from the group comprising the alcohols, organic acids and sugars, methanol being preferred.

12. A process according to claim 10, wherein H₂O₂ as the oxygen-releasing substance is added to the water before the aerobic stage.

13. A process according to claim 1, which comprises passing the water, which is polluted by a mixture of trichloroethene, tetrachloroethene, 1,2,3-trichloropropane, chloroform and/or 1,3-dichlorobenzene in a concentration of 100µg/1-50 mg/l, through two series-arranged fixed-bed or fluid-bed reactors packed with sintered glass populated by microorganisms obtained from sewage sludges, the first reactor being operated under anaerobic conditions and being followed by an aerobically operated reactor, methanol being added to the water before it passes through the anaerobically operated reactor, and an aqueous H₂O₂ solution being added before passing through the aerobically operated reactor, and also, if appropriate, inorganic salts and/or pH-regulating substances being added.

14. A process according to claim 1, wherein a conventional fixed-bed or fluid-bed reactor is used as the reactor.

## Revendications

1. Procédé de purification de l'eau, caractérisé en ce que l'on fait passer de l'eau, polluée par un mélange de composés halogénés qui sont de préférence des hydrocarbures halogénés et se trouvent en une concentration de 10 µg/l à 10 g/l, dans au moins deux réacteurs (étapes de traitement) remplis d'un matériau poreux colonisé par un ou plusieurs microorganismes, l'un de ces réacteurs fonctionnant dans des conditions anaérobies et ce réacteur étant suivi d'un réacteur fonctionnant dans des conditions aérobies.

2. Procédé conforme à la revendication 1, caractérisé en ce que les étapes de traitements anaérobies et/ou aérobies s'effectuent dans plusieurs réacteurs, disposés en parallèle et/ou en série.

3. Procédé conforme à la revendication 1, caractérisé en ce que les composés halogénés, qui sont de préférence des hydrocarbures halogénés, sont des composés chlorés et/ou bromés.

4. Procédé conforme à la revendication 3, caractérisé en ce que les hydrocarbures halogénés comportent au plus 9 atomes de carbone.

5. Procédé conforme à la revendication 4, caractérisé en ce que les hydrocarbures halogénés sont du trichloroéthène, du tétrachloroéthène, du 1,2,3-trichloropropane, du chloroforme et/ou du 1,3-dichlorobenzène.

6. Procédé conforme à l'une des revendications 1 à 5, caractérisé en ce que le matériau poreux est du verte fritté, une roche volcanique, de l'ardoise expansée, de l'argile expansée, du sable, une mousse de matière plastique ou du charbon actif.

7. Procédé conforme à la revendication 6, caractérisé en ce que le matériau poreux est du verte fritté, du charbon actif ou une mousse de polyuréthane contenant ou non des particules de charbon actif incorporées dedans.

8. Procédé conforme à la revendication 7, caractérisé en ce que le matériau poreux est du charbon actif.

9. Procédé conforme à l'une des revendications 1 à 8, caractérisé en ce que les microorganismes utilisés sont obtenus à partir d'une culture pure, d'une boue de curage ou de sols contaminés.

10. Procédé conforme à l'une des revendications 1 à 9, caractérisé en ce qu'on ajoute à l'eau, avant de la faire passer par la première étape de procédé, une source de carbone et/ou, au cours de la deuxième étape de procédé, une substance libérant de l'oxygène et/ou des substances nutritives, et en ce que l'on adapte éventuellement le pH dans une seule ou dans les deux étapes de procédé.

11. Procédé conforme à la revendication 10, caractérisé en ce que la substance servant de source de carbone est choisie parmi les alcools, les acides organiques et les sucres, avec une préférence pour le méthanol.

12. Procédé conforme à la revendication 10, caractérisé en ce qu'on ajoute à l'eau, avant l'étape de traitement aérobie, du peroxyde d'hydrogène H₂O₂ en tant que substance libérant de l'oxygène.

13. Procédé conforme à la revendication 1, caractérisé en ce que l'on fait passer de l'eau, polluée par un mélange de trichloroéthène, tétrachloroéthène, 1,2,3-trichloropropane, chloroforme et/ou 1,3-dichlorobenzène en une concentration de 100 µg/l à 50 mg/l, dans deux réacteurs à lit fixe ou à lit fluidisé, disposés en série et garnis de verte fritté colonisé par des microorganismes obtenus à partir de boues de curage, en ce que le premier réacteur fonctionne dans des conditions anaérobies et qu'il est suivi d'un réacteur fonctionnant dans des conditions aérobies, et en ce qu'on ajoute à l'eau du méthanol, avant de la faire passer dans le réacteur fonctionnant dans des conditions anaérobies, et une solution aqueuse d'H₂O₂, ainsi que, le cas échéant, des sels minéraux et/ou des substances permettant d'ajuster le pH, avant de faire passer l'eau dans le réacteur fonctionnant dans des conditions aérobies.

14. Procédé conforme à la revendication 1, caractérisé en ce qu'on utilise, comme réacteurs, des réacteurs habituels à lit fixe ou à lit fluidisé.
